# EUROPEAN PATENT SPECIFICATION

(11) **EP 2 865 956 B1**
(45) Date of publication and mention of the grant of the patent: **20.06.2018**
(21) Application number: 14189382.6
(22) Date of filing: 17.10.2014
(51) Int. Cl.: F24F 6/06, F24F 6/00, F24F 3/16

(54) **Humidifier**
Befeuchter
Humidificateur

(30) Priority: 24.10.2013 KR 20130127093
(43) Date of publication of application: 29.04.2015
(73) Proprietor: LG Electronics Inc., SEOUL, 07336 (KR)
(72) Inventor: Jang, Joonho, 153-802 Seoul (KR); Lee, Chunbae, 153-802 Seoul (KR)
(74) Representative: Ter Meer Steinmeister & Partner

(56) References cited:
- WO-A1-2013/011808
- GB-A- 572 347
- US-A1- 2011 084 415
- US-A1- 2012 161 343
- US-A1- 2012 297 975

## Description

### BACKGROUND

In general, humidifiers are devices for discharging moisture contained in air to raise humidity in the air. Humidifiers may be classified into ultrasonic humidifiers using ultrasonic vibration and natural vaporizing humidifiers in which flowing air contacts moisture to allow the air to contain the moisture.

A humidification air cleaner is disclosed in Korean Patent Publication No. 2012-0136137 that is a prior document.

The humidification air cleaner has a suction part in a side surface of an upper case and a discharge part in a top surface of the upper case.

A discharge guide part is disposed in the upper case. The discharge guide part includes a separation bracket, and the separation bracket is screw-coupled to the upper case. A fan is disposed in an upper portion of the separation bracket, and a motor is disposed in a lower portion of the separation bracket.

According to the humidification air cleaner as described above, a filter for filtering air is not provided. Thus, the humidified air may smell or be deteriorated in cleanliness.

Also, the discharge guide part on which the fan and motor are installed has to be separated form the upper case to clean the fan.

US 2012/161343 A1 describes an air conditioner. The air conditioner includes a main body in which a blower fan to circulate air is received, a front panel provided at the front side of the main body, and a humidifying gear assembly separably installed in the main body. Air passes through a humidifying filter.

### SUMMARY

It is an object of the present invention to provide a humidifier in which a filter and fan are easily cleaned. The object is solved by the features of the independent claim.

In one embodiment, a humidifier includes: a main body having a discharge part; a base on which the main body is seated; a tray seated on the base to store water; a disk assembly seated on the tray to humidify air; a filter assembly disposed in the main body to filter the humidified air; and a fan provided in the main body to blow air, wherein the fan is disposed at a downstream side the filter assembly, wherein the filter assembly is disposed between the fan and the disk assembly, and wherein, when the main body is separated from the base, the filter assembly is exposed to an outside.

The main body may include a case assembly surrounding the fan, and the filter assembly may be separably coupled to the case assembly.

The filter assembly may cover a lower side of the fan in the state where the filter assembly is mounted on the case assembly, and when the filter assembly is separated from the case assembly, the fan may be exposed.

The humidifier may further include a fan motor for rotating the fan, wherein a shaft of the fan motor overlaps the filter assembly in a flow direction of the air.

The humidifier may further include a motor support to support the fan motor, and the fan may be coupled to the shaft of the fan motor at a lower side of the motor support in a state where the shaft of the fan motor passes through the motor support.

One or more holes through which the humidified air passes may be defined in the motor support.

A portion or the whole of the fan may overlap the filter assembly in a flow direction of the air.

The case assembly may include: an upper case in which the fan is accommodated; and a middle case disposed under the upper case to cover a portion of the disk assembly, and the filter assembly may be coupled to the middle case.

The filter assembly may include: a filter frame on which a filter is seated; and a filter case coupled to the filter frame, and the filter case is coupled to the case assembly.

A disk motor assembly for operating the disk assembly may be disposed on the case assembly.

The main body may include a housing having a suction part through which the air is suctioned, and a suction filter for filtering the air suctioned through the suction part may be disposed inside the housing.

An air guide for guiding the air filtered by the suction filter toward the disk assembly may be disposed inside the housing.

The details of one or more embodiments are set forth in the accompanying drawings and the description below. Other features will be apparent from the description and drawings, and from the claims.

### BRIEF DESCRIPTION OF THE DRAWINGS

Fig. 1 is a perspective view of a humidifier according to an embodiment.
Fig. 2 is an exploded perspective view of the humidifier according to an embodiment.
Fig. 3 is an exploded perspective view of a case assembly according to an embodiment.
Fig. 4 is an exploded perspective view of a fan motor assembly according to an embodiment.
Fig. 5 is an exploded perspective view of a base according to an embodiment.
Fig. 6 is an exploded perspective view of a disk assembly according to an embodiment.
Fig. 7 is a cross-sectional view of the disk assembly according to an embodiment.
Fig. 8 is a block diagram illustrating a process of controlling the humidifier according to an embodiment.
Fig. 9 is a cross-sectional view of the humidifier according to an embodiment.

### DETAILED DESCRIPTION OF THE EMBODIMENTS

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the scope of the appending claims. To avoid detail not necessary to enable those skilled in the art to practice the invention, the description may omit certain information known to those skilled in the art. The following detailed description is, therefore, not to be taken in a limiting sense.

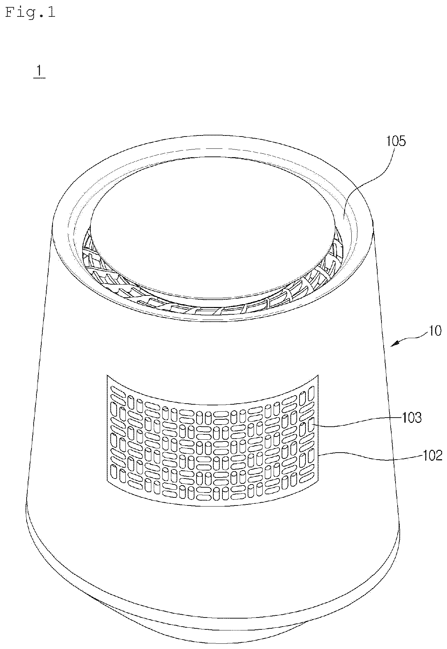

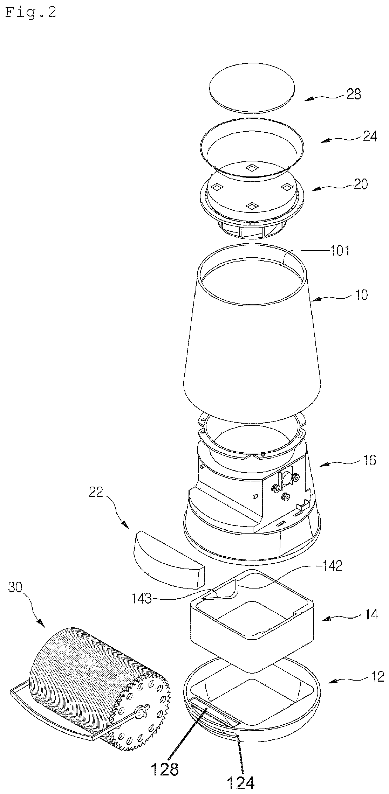

Fig. 1 is a perspective view of a humidifier according to an embodiment, and Fig. 2 is an exploded perspective view of the humidifier according to an embodiment.

Referring to Figs. 1 and 2, a humidifier 1 according to the current embodiment includes a main body and a base 12 on which the main body is seated. The main body includes a housing 10 defining an exterior thereof.

Also, the main body may include a tray 14 in which water is stored, a case assembly 16 for guiding a flow of air within the housing 10, a fan motor assembly 20 for blowing the air, a control unit 22 for controlling an operation of the humidifier 1, an input panel 28 seated on an upper portion of the fan motor assembly 20 to receive a manipulation command of the humidifier 1, and a disk assembly 30 seated on the tray 14.

Also, the main body may further include a deco member 24 coupled to an upper portion of the housing 10.

The main body may include a discharge part 105 through which humidified air is discharged.

The discharge part 105 may have a close loop shape when viewed from a top surface of the main body. For example, the discharge part 105 may have a circular ring shape, but is not limited thereto.

The housing 10 has opened upper and lower portions. That is, the housing 10 includes an upper opening and a lower opening.

The housing 10 may include a suction grill 102 having a second suction part 103 through which air is introduced. The suction grill 102 may be separably coupled to the housing 10.

The upper opening of the housing 10 may provide a passage through which the humidified air passes.

A seat end 101 on which the fan motor assembly 20 is seated is disposed on an upper portion of an inner circumferential surface of the housing 10.

Hereinafter, an inner structure of the humidifier 1 will be described in detail.

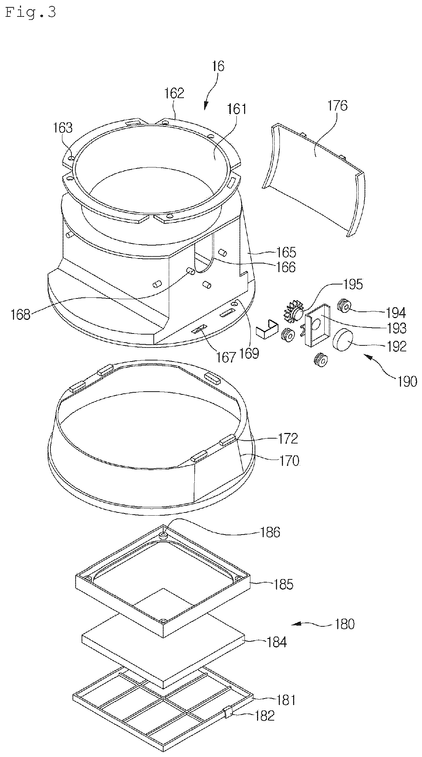

Fig. 3 is an exploded perspective view of the case assembly 16 according to an embodiment.

Referring to Fig. 3, the case assembly 16 according to an embodiment may include an upper case 161 that serves as a fan housing, a middle case 165 disposed under the upper case 161 to guide the humidified air into the upper case 161, and a lower case 170 disposed under the middle case 165 and seated on the base 12.

The upper case 161 and the middle case 165 may be integrated with each other. The lower case 170 may be separably coupled to the middle case 165. For another example, the upper case 161 and the middle case 165 may be separably coupled to each other, and the middle case 165 and the lower case 170 may be integrated with each other. Alternatively, the upper, middle, and lower cases 161, 165, and 170 may be integrated with each other or may be separately provided and then coupled to each other.

A coupling part 162 may horizontally extend from an upper end of the upper case 161, and a coupling hole 163 may be defined in the coupling part 162. The coupling part 162 may be coupled to the fan motor assembly 20.

The coupling part 162 may be seated on and supported by the seat end 101 of the housing 10 in a state where the coupling part 162 is accommodated into the housing 10.

The control unit 22 may be disposed on the middle case 165. Also, a disk motor assembly 190 may be disposed on the middle case 165.

The disk motor assembly 190 may include a disk motor 192 generating a power for rotating the disk assembly 30 (see Figure 2, a motor bracket 193 disposed on the disk motor 192, and a transmission part 195 connected to the disk motor 192 to transmit the power of the disk motor 192 into the disk assembly 30.

A buffer member 194 is coupled to the motor bracket 193. A protrusion 168 inserted into the buffer member 194 is disposed on the middle case 165.

Thus, since the buffer member 194 coupled to the motor bracket 193 is coupled to the middle case 165, vibration generated while the disk motor 192 operates may be absorbed by the buffer member 194 to minimize the transmission of the vibration into the middle case 165. Fig. 3 shows the provision of three buffer members 194 on three protrusions 168.

The transmission part 195 may include, for example, at least one gear. An opening 166 through which the transmission part 195 passes may be defined in the middle case 165. When the disk motor assembly 190 is disposed on the middle case 165, the transmission part 195 may pass through the opening 166 and then is disposed in the middle case 165.

An insertion hole 167 in which an insertion part 172 of the lower case 170 is inserted is defined under the middle case 165.

An air guide 176 for guiding the air suctioned through the second suction part 103 may be coupled to the middle case 165. Although not shown, a hole in which a portion of the air guide 176 is inserted may be defined in a side surface of the middle case 165. Thus, the air suctioned through the second suction part 103 may pass through the hole by the air guide 176 and then be introduced into the middle case 165.

A filter assembly 180 may be disposed on the case assembly 16. The filter assembly 180 may be coupled to, for example, the middle case 165 within the case assembly 16.

The filter assembly 180 may include a filter frame 181 on which a filter 184 is seated and a filter case 185 coupled to the filter frame 181.

At least one hook 182 coupled to the filter case 185 may be disposed on the filter frame 181. At least one coupling boss 186 coupled to the middle case 165 may be disposed on the filter case 185.

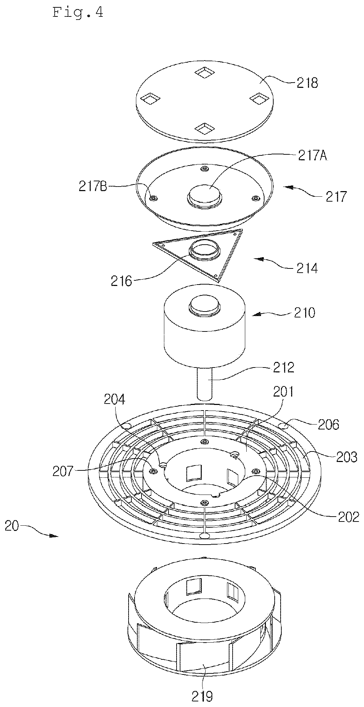

Fig. 4 is an exploded perspective view of the fan motor assembly 20 according to an embodiment.

Referring to Fig. 4, the fan motor assembly 20 according to the current embodiment may include a fan motor 210, a motor support 201 on which the fan motor 210 is seated, a fan 219 coupled to a shaft 212 of the fan motor 210, a motor pressing part 214 coupled to the motor support 201 to press the fan motor 210, thereby preventing the fan motor 210 from vibrating, a guide 217 seated on the motor pressing part 214 and coupled to the motor support 201, and a cover 218 seated on an upper portion of the guide 217.

A motor accommodation part 202 in which the fan motor 210 is accommodated may be disposed in the motor support 201. Also, one or more holes 203 through which the humidified air passes may be defined in the motor support 201.

The shaft 212 of the fan motor 210 may pass through the motor accommodation part 202 in the state where the shaft 212 of the fan motor 210 is accommodated in the motor accommodation part 202. Thus, the fan 219 may be coupled to the shaft 212 of the fan motor 210 from a lower side of the motor support 201.

Also, the motor support 210 may further include a seat groove 204 on which the motor pressing part 214 is seated, a first coupling hole 206 to which a coupling member coupled to the upper case 161 is coupled, and a second coupling hole 207 to which a coupling member coupled to the guide 217 is coupled.

A first accommodation part 216 in which a portion of the fan motor 210 is accommodated is disposed in the motor pressing part 214.

A second accommodation part 217A in which the first accommodation part 216 of the motor pressing part 214 is accommodated may be disposed in the guide 217. Also, a coupling hole 217B to which a coupling member coupled to the motor support 201 is coupled may be defined in the guide 217.

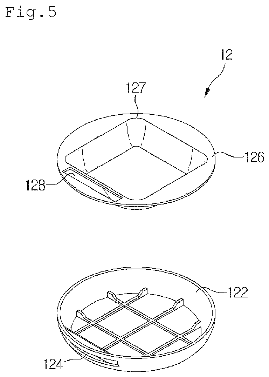

Fig. 5 is an exploded perspective view of the base 12 according to an embodiment.

Referring to Fig. 5, the base 12 according to the current embodiment may include a lower base 122 and an upper base 126 seated on the lower base 122.

The base 12 may further include first suction parts 124 and 128 through which air is suctioned. The first suction parts 124 and 128 may include a first hole 124 defined in the lower base 122 and a second hole 128 defined in the upper base 126.

Also, a tray accommodation part 127 in which a portion of the tray 14 is accommodated may be disposed in the upper base 126.

Although the base 12 is constituted by two members in the current embodiment, the present disclosure is not limited thereto. For example, the base 12 may be provided as a single member.

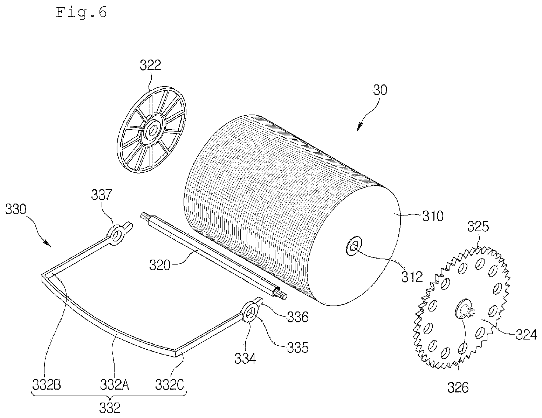

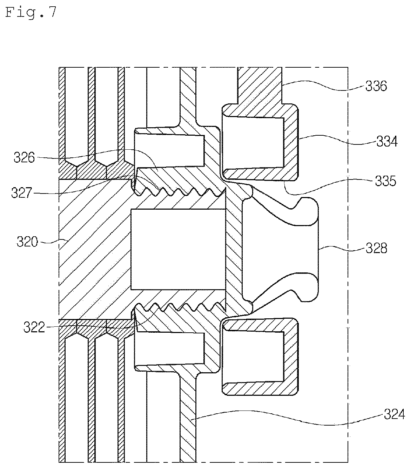

Fig. 6 is an exploded perspective view of a disk assembly 30 according to an embodiment, and Fig. 7 is a cross-sectional view of the disk assembly 30 according to an embodiment.

Referring to Figs. 2, 6, and 7, the disk assembly 30 may include a plurality of stacked disks 310, a shaft 320 passing through the plurality of disks 310 at the same time, a first disk cover 322 coupled to one side of the shaft 320 at one side of the plurality of disks 310, a second disk cover 324 coupled to the other side of the shaft 320 at the other side of the plurality of disks 310, and a handle 330 coupled to the first and second disk covers 322 and 324.

Each of the plurality of disks 310 may have, for example, a circular plate shape and have a shaft hole 312 through which the shaft 320 passes.

The shaft 320 may have, for example, a non-circular cross-section. The shaft hole 312 may have the same cross-sectional shape as the shaft 320. Thus, the plurality of disks 310 may rotate together with the shaft 320 by the rotation of the shaft 320.

The second disk cover 324 may include a shaft coupling part 326 to which the other end of the shaft 320 is coupled. An insertion groove 327 in which the shaft 320 is inserted may be defined in the shaft coupling part 326. Also, a screw thread may be formed on an end of the shaft 320, and a screw thread coupled to the screw thread of the shaft 320 may be formed on an inner circumferential surface of the insertion groove 327.

Thus, since the second disk cover 324 and the shaft 320 are screw-coupled to each other, when the second disk cover 324 rotates, the shaft 320 may rotate together with the second disk cover 324.

A handle coupling part 328 coupled to the handle 330 may be disposed on the second disk cover 324. The handle coupling part 328 may include a plurality of hooks spaced apart from each other.

A plurality of gear teeth 325 connected to the transmission part 195 of the disk motor assembly 190 may be disposed on a circumference of the second disk cover 324.

In the current embodiment, the first disk cover 322 includes a shaft coupling part and a handle coupling part that have the same structure as the shaft coupling part 326 and the handle coupling part 328, which are disposed on the second disk cover 324. Thus, detailed description with respect to the structure of the first disk cover 322 will be omitted.

The handle 330 may include a handle body 332 to be grasped by a user and a pair of cover coupling parts 334 and 337 that are disposed on both ends of the handle body 332. For example, the handle body 332 may include a first body 332A and a pair of second bodies 332B and 332C that extend from both ends of the first body 332A. The cover coupling parts 334 and 337 may be disposed on the pair of second bodies 332B and 332C, respectively. That is, the handle body 332 may have, for example, a " 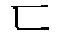 " shape.

A coupling hole 335 to which the handle coupling part 328 of each of the disk covers 322 and 324 is coupled may be defined in each of the cover coupling parts 334 and 337. Since the handle coupling part 328 includes a plurality of hooks, the plurality of hooks may be elastically deformed in directions close to each other while passing through the coupling hole 335. Then, each of the plurality of hooks may be deformed to return to its original state after passing through the coupling hole 335. Thus, the handle coupling part 328 may be coupled to the cover coupling parts 334 and 337. Also, the handle 330 may relatively rotate with respect to the disk covers 322 and 324 in the state where the handle 330 is coupled to each of the disk covers 322 and 324.

Each of the cover coupling parts 334 and 337 of the disk assembly 30 may be seated on and supported by the tray 14. Here, a guide protrusion 336 may be disposed on each of the cover coupling parts 334 and 337 so that the handle 330 is seated on the tray 14 in a state where the handle 330 rotates in one direction. The guide protrusion 336 may protrude from each of the cover coupling parts 334 and 337 in a direction that is inclined with respect to the extension direction of the second bodies 332B and 332C. That is, an angle between the guide protrusion 336 and the second bodies 332B and 332C may be greater or less than an angle of about 180°.

The tray 14 may include a first seat groove 142 on which each of the cover coupling parts 334 and 337 is seated and a second seat groove 143 on which the guide protrusion 336 is completely seated in only a state where the handle 330 rotates in one direction.

In the current embodiment, when the disk motor 192 operates in the state where the disk assembly 30 is seated on the tray 14, a power of the disk motor 192 may be transmitted into the second disk cover 324 through the transmission part 195. As a result, the second disk cover 324 may rotate in one direction, and thus, the shaft 320, the plurality of disks 310, and the first disk cover 322 may rotate in one direction together with the second disk cover 324. Here, the handle 330 may be maintained in the stopped state without rotating in the state where the handle 330 is seated on the seat grooves 142 and 143.

Thus, according to the current embodiment, the handle 330 may relatively rotate with respect to the shaft 320 in the state where the handle 330 is seated on the tray 14 without the shaft 320 is directly seated on the tray 14. Thus, damage of the tray 14 while the shaft 320 rotates may be prevented. In addition, since the handle coupling part 328 rotates within a range of the coupling hole 335 of the handle 330, rotation noises may be reduced.

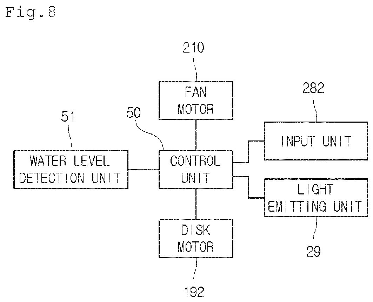

Fig. 8 is a block diagram illustrating a process of controlling the humidifier according to an embodiment.

Referring to Fig. 8, the humidifier 1 according to the current embodiment may include a water level detection unit 51 for detecting a water level, a control unit 50 for controlling the fan motor 210 and the disk motor 192, an input unit 282 for receiving an operation command, and a light emitting unit 29 for emitting light.

The water level detection unit 51 may detect a water level within the tray 14 on the basis of capacitance.

The input unit 282 may be disposed on the input panel 28 (see Fig. 2). For example, the input unit 282 may receive a command by user's touch manipulation. Also, the light emitting unit 29 may be disposed on the input panel 28.

The control unit 50 may control the fan motor 210 and the disk motor 192 on the basis of information of the water level detected by the water level detection unit 51.

Also, the control unit 50 may control the fan motor 210, the disk motor 192, and the light emitting unit 29 according to the command inputted into the input unit 282.

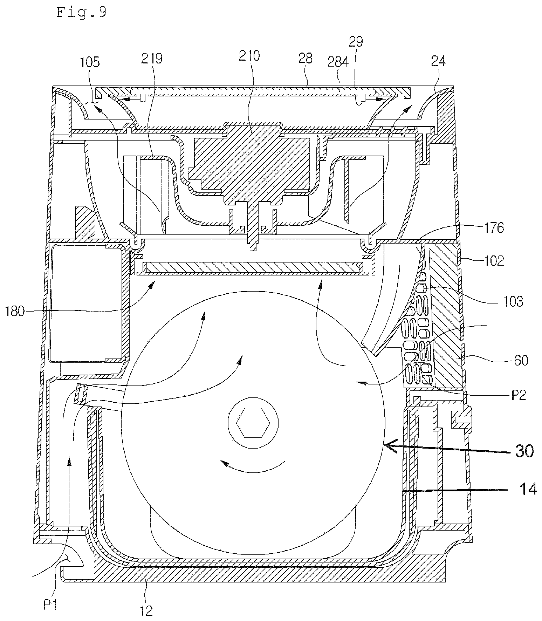

Fig. 9 is a cross-sectional view of the humidifier according to an embodiment.

A process of assembling the humidifier will be described below with reference to Figs. 1 to 9.

The tray 14 is seated on the base 12.

Then, the disk assembly 30 is seated on the tray 14. As described above, the handle 330 may be seated on the tray 14 in the disk assembly 30, particularly, the handle may be seated on the tray 14 in only the state where the handle 330 rotates in one direction.

When the disk assembly 30 is seated on the tray 14, the plurality of disks 310 may be spaced apart from a bottom surface of the tray 14. Also, a portion of the plurality of disks 310 may protrudes to outside of the tray 14.

Then, the case assembly 16 is seated on the base 12.

When the case assembly 16 is seated on the base 12, the lower case 170 may cover the tray 14, and the middle case 165 may cover the plurality of disks 310 that protrude to the outside of the tray 14. Also, a lower end of the air guide 176 coupled to the middle case 165 may be disposed adjacent to the plurality of disks 310. Here, the lower end of the air guide 176 may be disposed higher than the shaft 320 of the disk assembly 30.

Also, when the case assembly 16 is seated on the base 12, the transmission part 195 of the disk motor assembly 190 may be engaged with the second disk cover 324 of the disk assembly 30.

Also, when the case assembly 16 is seated on the base 12, a portion of the middle base 164 may be seated on the tray 14.

Also, when the case assembly is seated on the base 12, the filter assembly 180 may be disposed above the disk assembly 30.

Then, the control unit 22 may be coupled to the case assembly 16. Of cause, the case assembly 16 may be seated on the base 12 in a state where the control unit 22 is coupled to the case assembly 16.

Then, the housing 10 is seated on the base 12.

The fan motor assembly 20 is accommodated into the housing 10 from an upper side of the housing 10, and then, the fan motor assembly 20 is coupled to the housing 10 and the upper case assembly 16.

The seat end 101 of the housing 10 is seated on the coupling part 162 of the case assembly 16, and the fan motor assembly 20 is seated on the coupling part 162. Also, the fan motor assembly 20 may be coupled to the seat end 101 and the coupling part 162 by a single coupling member.

Thus, the housing 10, the case assembly 16, and the fan motor assembly 20 may be separated from the base 12 as one module. That is, the main body may be separated from the base 12 as one module.

Then, the deco member 24 is coupled to an upper portion of an inner circumferential surface of the housing 10, and the input panel 28 is coupled to an upper portion of the fan motor assembly 20 to complete the assembly of the humidifier.

Here, the fan motor assembly 20 may be coupled to the housing 10 after the input panel 28 is coupled to the fan motor assembly 20.

Next, a process of separating the filter assembly 180 will be described below.

To clean the filter assembly 180 or the fan 219, the main body is separated from the base 12.

Here, since the housing 10 is coupled to the case assembly 16 and the fan motor assembly 20, the case assembly 16, the fan motor assembly 20, and the housing 10 may be separated from the base 12 at the same time.

The filter assembly 180 is disposed under the fan 219. The filter assembly 180 is disposed between the fan 219 and the disk assembly 30. The filter assembly 180 is disposed above the fan 219.

Thus, when the main body is separated from the base 12, the state in which the tray 14 is seated on the base 12 may be maintained. Here, the state in which the disk assembly 30 is seated on the tray 14 may be maintained.

Thus, when the main body is separated from the base 12, the filter assembly 180 is exposed to the outside. A user may separate the filter assembly 180 from the case assembly 16 to clean the filter 184.

The filter assembly 180 covers a lower side of the fan 219 in the state where the filter assembly 180 is mounted on the case assembly 16. Also, an extension direction of the shaft 212 of the fan motor 210 may cross the filter assembly 180. A portion or the whole of the fan 219 may be disposed to overlap the filter assembly in a vertical direction or a direction in which the air flows.

Also, when the filter assembly 180 is separated from the case assembly 16, the fan 219 is exposed. Thus, the user may clean the fan 219 that is exposed to the outside in the state where the filter assembly 180 is separated from the case assembly 16.

According to the current embodiment, when the housing 10 is separated from the base 12, and the filter assembly 180 is separated from the case assembly 16, the fan 219 is exposed. Thus, since the user cleans the fan 219 without separating the fan 219, user's convenience may be improved.

Next, a flow of air within the humidifier will be described.

The first suction parts 124 and 128 defined in the base 12 may form a first suction passage P1. Also, the tray 14 and the lower case 170 of the case assembly 16 may be spaced apart from each other to form a portion of the first suction passage P1.

The suction grill 102 and the air guide 176 may be spaced a predetermined distance from each other, and a second suction passage P2 may be defined between the suction grill 102 and the air guide 176. Also, a suction filter 60 for filtering suctioned air is disposed in the second suction passage P2.

The fan 219 may rotate by the operation of the fan motor 210, and the disk 310 may rotate by the operation of the disk motor 192.

The disk 310 may rotate, for example, in a clockwise direction in Fig. 9. When the disk 310 rotates, the disk 310 wetted by water may be exposed to the outside of the tray 14.

When the fan 219 rotates, air may be suctioned into the humidifier 1 through the first suction parts 124 and 128 and the second suction part 103. That is, the air may be suctioned by passing through the base 12, and also the air may be suctioned by passing through the housing 10.

Here, since the suction filter 60 is disposed in the second suction passage P2, the suction filter 60 may serve as air flow resistance in the suction passage P2.

Thus, in case of the humidifier 1 according to the current embodiment, an amount of air suctioned through the first suction parts 124 and 128 in the air introduced into the humidifier 1 may be greater than that of air suctioned through the second suction part 103. Therefore, the first suction parts 124 and 128 may be called "main suction parts", and the second suction part 103 may be called an "auxiliary suction part".

Also, the first suction parts 124 and 128 may be disposed lower than the shaft 320 of the disk assembly 30, and the second suction part 103 may be disposed higher than the shaft 320.

The air suctioned through the first suction parts 124 and 128 may flow upward along the first suction passage P1 to flow into a space between the wetted disks 310. Thus, the air may contain moisture while contacting the disks 310.

In the current embodiment, the first suction parts 124, 128 may be defined in the base 12 to effectively prevent the air from being introduced into the humidifier 1 through the first suction parts 124, 128, thereby preventing the inside of the humidifier 1 from being contaminated.

Also, the air suctioned through the second suction part 103 may pass through the suction filter 60 to flow toward the disk assembly 30 by the air guide 176. Also, the air suctioned through the second suction part 103 may contain moisture while flowing into the space between the wetted disks 310 to contact the disks 310.

Here, the second suction part 103 may be defined in the suction grill 102 to primarily prevent foreign substances from being introduced by the suction grill 102. Also, the suction filter 60 may be disposed inside the suction grill 102 to secondarily prevent foreign substances from being introduced by the suction filter 60. Thus, the contamination of the inside of the humidifier due to the introduction of the foreign substance may be prevented.

Also, since the second suction part is defined in a portion of the housing 10, and a user is capable of seeing the first suction part, the humidifier 1 may be improved in a sensor of beauty.

The humidified air may be filtered while passing through the filter assembly 180. After the humidified air passes through the fan 219, the air may be guided by the upper case 161 of the case assembly 16 to flow upward.

Then, the humidified air may pass through the one or more holes 203 of the fan motor assembly 20 and then be discharged from the humidifier 1 through the discharge part 105 defined between the deco member 24 and the guide 217.

As described above, since the discharge part 105 has the close loop shape, the humidified air may be discharged in all directions, i.e., at about 360° and thus be uniformly spread into the indoor space.

Since the deco member 24 and the guide 217 define the discharge part 105 to guide the discharge of the air in the current embodiment, the deco member 24 may be called a first guide, and the guide 217 may be called a second guide.

Next, an operation of the light emitting unit 29 will be described.

The input unit 282 may include a printed circuit board 284 on which the light emitting unit 29 is mounted. The light emitting unit 29 may pass through the cover 218 of the fan motor assembly 20 and then be disposed within the guide 217. The light emitting unit 29 may include a plurality of light emitting diodes (LEDs) that emit light having various colors. In the current embodiment, the cover 218 of the fan motor assembly 20 may be omitted. In this case, the input panel 28 may serve as the cover 218.

At least one humidification mode may be selected by the input unit 282. Also, a lighting mode may be selected by the input unit 282.

When the lighting mode is selected, the control unit 50 may turn the light emitting unit 29 on in a state where the fan motor 210 and the disk motor 192 are stopped in operation. Here, the light emitting unit 29 may emit light having a first color. In the current embodiment, since the user is capable of selecting the lighting mode, the humidifier may serve as a lighting apparatus.

The control unit 50 may control the light emitting unit 29 so that the light emitting unit 29 emits light having a color different from the first color according to the selected humidification mode. Of cause, the light emitting unit 29 may emit light having a single color. Also, the control unit 50 may control the light emitting unit 29 so that the light emitting unit 29 emits light having different colors according to the humidification modes.

The light emitting unit 29 may emit light onto the guide 217. Here, the guide 217 may be formed of a transparent or translucent material so that the light emitted from the light emitting unit 29 passes through the guide 217.

Also, the light emitting unit 29 may pass through the guide 217 to emit onto the deco member 24. Thus, the light may be emitted through the deco member 24. Here, the deco member 24 may be formed of a transparent or translucent material. Also, the deco member 24 may serve as a reflection plate.

According to the current embodiment, when the humidifier operates, light may be emitted from the light emitting unit 29. Thus, the user may easily recognize that the humidified air is discharging.

Although the light emitting unit 29 is disposed on the input unit 282 inside the guide 217 in the current embodiment, the present disclosure is not limited thereto. For example, the light emitting unit 29 may be disposed on the guide 217 or the deco member 24.

Also, although the deco member 24 is provided as a separate part and then is coupled to the housing 10, the present disclosure is not limited thereto. For example, the deco member 24 may be integrated with the housing 10.

## Claims

1. A humidifier (1) comprising:
a main body having a discharge part (105);
a base (12) on which the main body is seated;
a tray (14) seated on the base (12) to store water;
a disk assembly (30) seated on the tray (14) to humidify air;
a filter assembly (180) disposed in the main body to filter the humidified air; and
a fan (219) provided in the main body to blow air, wherein the fan (219) is disposed at a downstream side of the filter assembly (180), **characterized in that**
wherein the filter assembly (180) is disposed between the fan (219) and the disk assembly (30), and
wherein, when the main body is separated from the base (12), the filter assembly (180) is exposed to an outside.

2. The humidifier according to claim 1, wherein the main body comprises a case assembly (16) that surrounds the fan (219), and
the filter assembly (180) is separably coupled to the case assembly (16).

3. The humidifier according to any one of the claims 1 to 2, wherein the filter assembly (180) covers a lower side of the fan (219) in the state where the filter assembly (180) is mounted on the case assembly (16), and
when the filter assembly (180) is separated from the case assembly (16), the fan is exposed.

4. The humidifier according to any one of the claims 1 to 3, further comprising a fan motor (210) to rotate the fan (219),
wherein a shaft (212) of the fan motor (210) overlaps the filter assembly (180) in a flow direction of the air.

5. The humidifier according to any one of the claims 1 to 4, further comprising a motor support (201) to support the fan motor (210), and
the fan (219) is coupled to the shaft (212) of the fan motor (210) at a lower side of the motor support (201) in a state where the shaft (212) of the fan motor (210) passes through the motor support (201).

6. The humidifier according to claim 5, wherein one or more holes (203) through which the humidified air passes are defined in the motor support (201).

7. The humidifier according to any one of the claims 1 to 6, wherein a portion or the whole of the fan (219) overlaps the filter assembly (180) in a flow direction of the air.

8. The humidifier according to any one of the claims 2 to 7, wherein the case assembly (16) comprises:
an upper case (161) in which the fan (219) is accommodated; and
a middle case (165) disposed under the upper case (161) to cover a portion of the disk assembly (30), and
the filter assembly (180) is coupled to the middle case (165).

9. The humidifier according to any one of the claims 2 to 8, wherein the filter assembly (180) comprises:
a filter frame (181) on which a filter (184) is seated; and
a filter case (185) coupled to the filter frame (181), and
the filter case (185) is coupled to the case assembly (16).

10. The humidifier according to any one of the claims 2 to 9, wherein a disk motor assembly (190) for operating the disk assembly (30) is disposed on the case assembly (16).

11. The humidifier according to any one of the claims 1 to 10, wherein the main body comprises a housing (10) having a suction part (103) through which the air is suctioned, and
a suction filter (60) to filter the air suctioned through the suction part (103) is disposed inside the housing (10).

12. The humidifier according to claim 11, wherein an air guide (176) to guide the air filtered by the suction filter (60) toward the disk assembly (30) is disposed inside the housing (10).

## Patentansprüche

1. Luftbefeuchter (1), der Folgendes umfasst:
einen Hauptkörper, der ein Austrittsteil (105) aufweist;
eine Basis (12), auf der der Hauptkörper sitzt;
einen Einsatz (14), der auf der Basis (12) sitzt, zum Speichern von Wasser;
eine Scheibenanordnung (30), die auf dem Einsatz (14) sitzt, zum Befeuchten von Luft;
eine Filteranordnung (180), die in dem Hauptkörper angeordnet ist, zum Filtern der befeuchteten Luft; und
ein Gebläse (219), das in dem Hauptkörper zum Blasen von Luft vorgesehen ist, wobei das Gebläse (219) an einer Seite stromabwärts der Filteranordnung (180) angeordnet ist,
**dadurch gekennzeichnet, dass**
die Filteranordnung (180) zwischen dem Gebläse (219) und der Scheibenanordnung (30) angeordnet ist, und
dann, wenn der Hauptkörper von der Basis (12) getrennt ist, die Filteranordnung (180) nach außen freiliegt.

2. Luftbefeuchter nach Anspruch 1, wobei der Hauptkörper eine Gehäuseanordnung (16) umfasst, die das Gebläse (219) umgibt, und
die Filteranordnung (180) mit der Gehäuseanordnung (16) trennbar gekoppelt ist.

3. Luftbefeuchter nach einem der Ansprüche 1 bis 2, wobei die Filteranordnung (180) in dem Zustand, in dem die Filteranordnung (180) an der Gehäuseanordnung (16) angebracht ist, eine untere Seite des Gebläses (219) bedeckt, und
dann, wenn die Filteranordnung (180) von der Gehäuseanordnung (16) getrennt ist, das Gebläse freiliegt.

4. Luftbefeuchter nach einem der Ansprüche 1 bis 3, der ferner einen Gebläsemotor (210) zum Drehen des Gebläses (219) umfasst,
wobei eine Welle (212) des Gebläsemotors (210) mit der Filteranordnung (180) in Strömungsrichtung der Luft überlappt.

5. Luftbefeuchter nach einem der Ansprüche 1 bis 4, der ferner eine Motorhalterung (201) zum Halten des Gebläsemotors (210) umfasst und
wobei in einem Zustand, in dem die Welle (212) des Gebläsemotors (210) durch die Motorhalterung (201) verläuft, das Gebläse (219) mit der Welle (212) des Gebläsemotors (210) an einer unteren Seite der Motorhalterung (201) gekoppelt ist.

6. Luftbefeuchter nach Anspruch 5, wobei in der Motorhalterung (201) ein Loch oder mehrere Löcher (203), durch die die befeuchtete Luft gelangt, definiert sind.

7. Luftbefeuchter nach einem der Ansprüche 1 bis 6, wobei sich ein Abschnitt des Gebläses (219) oder das gesamte Gebläse (219) mit der Filteranordnung (180) in einer Strömungsrichtung der Luft überlappt.

8. Luftbefeuchter nach einem der Ansprüche 2 bis 7, wobei die Gehäuseanordnung (16) Folgendes umfasst:
ein oberes Gehäuse (161), in dem das Gebläse (219) untergebracht ist; und
ein mittleres Gehäuse (165), das unter dem oberen Gehäuse (161) angeordnet ist, um einen Abschnitt der Scheibenanordnung (30) zu bedecken,
wobei die Filteranordnung (180) mit dem mittleren Gehäuse (165) gekoppelt ist.

9. Luftbefeuchter nach einem der Ansprüche 2 bis 8, wobei die Filteranordnung (180) Folgendes umfasst:
einen Filterrahmen (181), auf dem ein Filter (184) sitzt; und
ein Filtergehäuse (185), das mit dem Filterrahmen (181) gekoppelt ist,
wobei das Filtergehäuse (185) mit der Gehäuseanordnung (16) gekoppelt ist.

10. Luftbefeuchter nach einem der Ansprüche 2 bis 9, wobei eine Scheibenmotoranordnung (190) zum Betreiben der Scheibenanordnung (30) an der Gehäuseanordnung (16) angeordnet ist.

11. Luftbefeuchter nach einem der Ansprüche 1 bis 10, wobei der Hauptkörper ein Gehäuse (10) umfasst, das ein Ansaugteil (103) aufweist, durch das die Luft angesaugt wird, und
wobei ein Ansaugfilter (60) zum Filtern der Luft, die durch das Ansaugteil (103) angesaugt wird, in dem Gehäuse (10) angeordnet ist.

12. Luftbefeuchter nach Anspruch 11, wobei eine Luftführung (176) zum Leiten der Luft, die durch den Ansaugfilter (60) gefiltert wird, zu der Scheibenanordnung (30) in dem Gehäuse (10) angeordnet ist.

## Revendications

1. Humidificateur (1) comprenant :
un corps principal ayant une partie de décharge (105) ;
une base (12) sur laquelle est placé le corps principal ;
un plateau (14) placé sur la base (12) pour stocker de l'eau ;
un assemblage de disques (30) placé sur le plateau (14) pour humidifier l'air ;
un assemblage formant filtre (180) agencé dans le corps principal pour filtrer l'air humidifié ; et
un ventilateur (219) prévu dans le corps principal pour souffler de l'air, dans lequel le ventilateur (219) est agencé au niveau d'un côté aval de l'assemblage formant filtre (180),
**caractérisé en ce que**
l'assemblage formant filtre (180) est agencé entre le ventilateur (219) et l'assemblage de disques (30), et
dans lequel, quand le corps principal est séparé de la base (12), l'assemblage formant filtre (180) est exposé vers l'extérieur.

2. Humidificateur selon la revendication 1, dans lequel le corps principal comprend un assemblage formant boîtier (16) qui entoure le ventilateur (219) et
l'assemblage formant filtre (180) est couplé de manière séparable à l'assemblage formant boîtier (16).

3. Humidificateur selon l'une quelconque des revendications 1 à 2, dans lequel l'assemblage formant filtre (180) couvre un côté inférieur du ventilateur (219) dans l'état dans lequel l'assemblage formant filtre (180) est monté sur l'assemblage formant boîtier (16), et
quand l'assemblage formant filtre (180) est séparé de l'assemblage formant boîtier (16), le ventilateur est exposé.

4. Humidificateur selon l'une quelconque des revendications 1 à 3, comprenant en outre un moteur de ventilateur (210) pour mettre en rotation le ventilateur (219),
dans lequel un arbre (212) du moteur de ventilateur (210) recouvre l'assemblage formant filtre (180) dans une direction d'écoulement de l'air.

5. Humidificateur selon l'une quelconque des revendications 1 à 4, comprenant en outre un support de moteur (201) pour supporter le moteur du ventilateur (210), et
le ventilateur (219) est couplé à l'arbre (212) du moteur de ventilateur (210) au niveau d'un côté inférieur du support de moteur (201) dans un état dans lequel l'arbre (212) du moteur de ventilateur (210) passe à travers le support de moteur (201).

6. Humidificateur selon la revendication 5, dans lequel un ou plusieurs trous (203) à travers lesquels passe l'air humidifié sont définis dans le support de moteur (201).

7. Humidificateur selon l'une quelconque des revendications 1 à 6, dans lequel une partie ou la totalité du ventilateur (219) recouvre l'assemblage formant filtre (180) dans une direction d'écoulement de l'air.

8. Humidificateur selon l'une quelconque des revendications 2 à 7, dans lequel l'assemblage formant boîtier (16) comprend :
un boîtier supérieur (161) dans lequel est installé le ventilateur (219) ; et
un boîtier intermédiaire (165) agencé en dessous du boîtier supérieur (161) pour couvrir une portion de l'assemblage de disques (30), et
l'assemblage formant filtre (180) est couplé au boîtier intermédiaire (165).

9. Humidificateur selon l'une quelconque des revendications 2 à 8, dans lequel l'assemblage formant filtre (180) comprend :
un châssis de filtre (181) sur lequel est placé un filtre (184) ; et
un boîtier de filtre (185) couplé au châssis de filtre (181), et
le boîtier de filtre (185) est couplé à l'assemblage formant boîtier (16).

10. Humidificateur selon l'une quelconque des revendications 2 à 9, dans lequel un assemblage formant moteur à disques (190) destiné à faire fonctionner l'assemblage de disques (30) est agencé sur l'assemblage formant boîtier (16).

11. Humidificateur selon l'une quelconque des revendications 1 à 10, dans lequel le corps principal comprend un logement (10) ayant une partie d'aspiration (103) à travers laquelle l'air est aspiré, et
un filtre d'aspiration (60) pour filtrer l'air aspiré à travers la partie d'aspiration (103) est disposé à l'intérieur du formant (10).

12. Humidificateur selon la revendication 11, dans lequel un guide d'air (176), destiné à guider l'air filtré par le filtre d'aspiration (60) en direction de l'assemblage de disques (30), est agencé à l'intérieur du logement (10).
